# EUROPEAN PATENT SPECIFICATION

(11) **EP 4 300 646 B1**
(45) Date of publication and mention of the grant of the patent: **06.08.2025**
(21) Application number: 22866259.9
(22) Date of filing: 21.07.2022
(51) Int. Cl.: H01M 10/04, H01M 10/0583

(54) **STACKING DEVICE AND METHOD FOR MANUFACTURING STACKED TYPE ELECTRODE ASSEMBLY**
LAMINIERUNGSVORRICHTUNG UND VERFAHREN ZUR HERSTELLUNG EINER LAMINIERTEN ELEKTRODENANORDNUNG
DISPOSITIF DE STRATIFICATION ET PROCÉDÉ DE FABRICATION D'ENSEMBLE D'ÉLECTRODES STRATIFIÉES

(30) Priority: 13.09.2021 CN 202111083684
(43) Date of publication of application: 03.01.2024
(73) Proprietor: Contemporary Amperex Technology (Hong Kong) Limited, Central, Central And Western District (HK)
(72) Inventor: LIAO, Ruhu, Ningde, Fujian 352100 (CN); ZENG, Gang, Ningde, Fujian 352100 (CN); WU, Zhiyang, Ningde, Fujian 352100 (CN); WANG, Jianlei, Ningde, Fujian 352100 (CN); DAI, Ya, Ningde, Fujian 352100 (CN); WEN, Zhihua, Ningde, Fujian 352100 (CN)
(74) Representative: Laufhütte, Dieter
(86) International application number: PCT/CN2022/106935
(87) International publication number: WO 2023/035785

(56) References cited:
- CN-A- 109 560 253
- CN-A- 110 277 590
- CN-A- 112 820 930
- CN-A- 113 013 471
- CN-U- 210 052 801
- CN-U- 210 467 996
- JP-A- 2012 199 210

## Description

The present invention claims priority to Chinese patent application 202111083684.2 entitled "STACKING DEVICE AND METHOD FOR MANUFACTURING STACKED TYPE ELECTRODE ASSEMBLY" and filed on September 13, 2021.

### Technical Field

The present invention relates to the technical field of batteries, and in particular to a stacking device and a method for manufacturing a stacked type electrode assembly.

### Background Art

Due to the advantages of high rate and high energy density of stacked type cells compared with wound cells, batteries made of stacked type cells are widely used.

A stacking device attaches separators on two sides of a negative electrode sheet, and then attaches a positive electrode sheet on the side of each separator away from the negative electrode sheet, and finally the negative electrode sheet, the separators and the positive electrode sheets that are attached to one another are repeatedly folded and stacked by means of a stacking platform to form a stacked type cell. The attachment process of the negative electrode sheet, the separators and the positive electrode sheets is relatively complicated, so that the entire structure of the stacking device is complicated and the material waste is serious, thus increasing the manufacturing cost.

Therefore, how to simplify the structure and reduce the material waste of the stacking device has become an urgent problem to be solved in the technical field of batteries. CN 112 820930 A, on which the preamble of claim 1 is based, relates to a laminating machine. The laminating machine comprises a heating device, a first sheet material device, a second sheet material device and a first compounding device. CN 113 013 471 A relates to a pre-oven thermal composite lamination device, and relates to the technical field of lithium ion battery manufacturing.

### Summary of the Invention

The present invention provides a stacking device and a method for manufacturing a stacked type electrode assembly, so as to simplify the structure of the stacking device and reduce the material waste.

In a first aspect, the present invention provides a stacking device according to claim 1.

Thanks to the fact that the first heating mechanism is arranged downstream of the separator delivery mechanism, the first heating mechanism is used to heat the negative electrode sheet and the separators, and the positive delivery mechanism for delivering the positive electrode sheets to the two sides of the negative electrode sheet is arranged downstream of the first heating mechanism, the first heating mechanism can heat the negative electrode sheet and the separators that are arranged in a laminated manner before the positive electrode sheets are attached to the separators, so as to soften glue or adhesives on surfaces of the separators, so that the separators have bonding properties, and the positive electrode sheets can be directly bonded to the separators and delivered to the next station along with the separators. There is no need to provide a PET film (Polyester Film) feeding apparatus for supplying PET films and to fix the positive electrode sheets by means of the PET films, so that the positive electrode sheets are static relative to the PET films, the positive electrode sheets do not shift during a delivery process of the PET films, and the positive electrode sheets are transported to the next station under the drive of the PET films. The entire structure of the stacking device is simplified, and the production cost of the stacked type electrode assembly is reduced. Moreover, no PET film is provided, which also shortens the path through which heat passes, and has a stronger ability to soften the glue or adhesives on the separators, thereby improving the attachment quality.

The second heating mechanism is used to heat the separators before the separators are attached to the negative electrode sheet, so that the glue or adhesives on the separators are softened, the separators then have bonding properties before being attached to the negative electrode sheet, and the separators can be bonded to the negative electrode sheet and conveyed to the first heating mechanism, facilitating the subsequent attachment of the positive electrode sheets to the negative electrode sheet.

The second heating assembly heats the side of the separator that is used to attach to the negative electrode sheet, so that the side of the separator that is used to attach to the negative electrode sheet can be sufficiently heated, the glue on the side of the separator that is used to attach to the negative electrode sheet can be thus sufficiently softened, and the side of the separator that is used to attach to the negative electrode sheet has stronger bonding properties.

The pressing mechanism is used to flatten the bent segments of the stacked type structure, so as to make the structure of the stacked type structure more compact in a laminating direction and improve the quality of the stacked type structure.

In some embodiments of the first aspect of the present invention, the first heating mechanism comprises two first heating assemblies respectively located on the two sides of the negative electrode sheet and respectively used for heating the separators on the two sides of the negative electrode sheet and the negative electrode sheet.

In the above technical solution, thanks to the fact that the first heating mechanism includes two first heating assemblies respectively located on the two sides of the negative electrode sheet for heating the separators on the two sides of the negative electrode sheet, the two separators are both sufficiently heated, so that the glue or adhesives on the surfaces of the two separators are sufficiently softened to provide stronger bonding properties.

In some embodiments of the present invention, glue is provided on the two sides of each separator to bond the separator to the negative electrode sheet and to bond the separator to the respective positive electrode sheet.

In the above technical solution, thanks to the fact that glue is provided on the two sides of each separator, the first heating mechanism can heat the separator to soften the glue on the separator, so that the glue can be sufficiently joined with the negative electrode sheet and the positive electrode sheet, so that a stronger ability to bond the separator to the negative electrode sheet, and the separator to the positive electrode sheet is provided.

Glue is provided on the two sides of the negative electrode sheet to bond the separators to the negative electrode sheet.

In the above technical solution, thanks to the fact that glue is provided on the two sides of the negative electrode sheet, the first heating mechanism can heat the negative electrode sheet to soften the glue on the negative electrode sheet, and the glue can be sufficiently joined with the separators, so that a stronger ability to bond the separators to the negative electrode sheet is provided.

In some embodiments of the first aspect, the second heating mechanism comprises two second heating assemblies respectively configured to heat the two separators.

In the above technical solution, both sides of the negative electrode sheet need to be attached to the separators, so there are two separators, and the second heating mechanism includes two second heating assemblies respectively for heating the two separators, so that the glue or adhesives on the surfaces of the separators can be sufficiently softened and the uniformity of heating of the two separators can be improved, thereby improving the attachment quality of the separators and the negative electrode sheet.

In some embodiments of the first aspect of the present invention, the separator delivery mechanism further comprises a first pressing roller assembly arranged downstream of the second heating mechanism and upstream of the first heating mechanism and configured to press the separators against the negative electrode sheet such that the separators are attached to the two sides of the negative electrode sheet.

In the above technical solution, the negative electrode sheet is bonded to the separators in advance, thereby avoiding the deflection phenomenon caused by the instantaneous tension loss of the negative electrode sheet after cutting. Moreover, the separators located on the two sides of the negative electrode sheet are pressed against the negative electrode sheet by the first pressing roller assembly, so that firmer connections are provided between the separators and the negative electrode sheet, and the attachment quality of the separators and the negative electrode sheet is improved.

In some embodiments of the first aspect of the present invention, the positive delivery mechanism comprises a third heating mechanism configured to heat the positive electrode sheets before the positive electrode sheets are attached to the separators.

In the above technical solution, the third heating mechanism is used to heat the positive electrode sheets before the positive electrode sheets are attached to the separators, so that the glue or adhesives on the surfaces of the positive electrode sheets are softened, and the positive electrode sheets also have a bonding ability to facilitate the attachment of the positive electrode sheets to the separators. In addition, providing heat to the positive electrode sheets during attachment can compensate for the heat loss during the conveying of the separators to the positive electrode sheets to be attached thereto, and reduce the heat loss of the separators, so that the glue or adhesives on the separators remain in a softened state, facilitating the provision of stronger bonding properties for the surfaces of the separators that are used to attach to the positive electrode sheets, and improving the attachment quality of the positive electrode sheets attached to the separators.

In some embodiments of the first aspect of the present invention, the third heating mechanism comprises two third heating assemblies respectively configured to heat the corresponding positive electrode sheet.

In the above technical solution, the separators are attached to the two sides of the negative electrode sheet, a respective positive electrode sheet is attached to the side of each separator away from the negative electrode sheet, and the third heating mechanism includes two third heating assemblies respectively configured to heat the corresponding positive electrode sheets, so that each positive electrode sheet can be sufficiently heated, and the glue or adhesives on the surfaces of the separators are sufficiently softened. Each positive electrode sheet has a relatively high heat when it is attached to the corresponding separator, which compensates for the heat loss during the conveying of the separator to the positive electrode sheet to be attached thereto, so that the glue or adhesive on the separator remains in a softened state, and the separator thus has better bonding properties.

In some embodiments of the first aspect of the present invention, the third heating assembly is configured to heat two sides of the corresponding positive electrode sheet.

In the above technical solution, thanks to the fact that the third heating assembly is configured to heat the two sides of the corresponding positive electrode sheet, each positive electrode sheet can be sufficiently heated in a thickness direction of the positive electrode sheet, so that the glue or adhesive on the positive electrode sheet is softened and has a bonding ability. Heating the positive electrode sheet can also make the positive electrode sheet have higher heat, which can effectively compensate for the heat loss of the corresponding separator.

In some embodiments of the first aspect of the present invention, the positive electrode sheets are provided with glue to bond the separators to the positive electrode sheets.

In the above technical solution, thanks to the fact that the positive electrode sheets are provided with glue, the third heating mechanism heats the positive electrode sheets such that the glue on the positive electrode sheets is softened, the softened glue can be sufficiently joined with the separators, and a stronger ability to bond the separators and the positive electrode sheets is provided.

In some embodiments of the first aspect of the present invention, the positive delivery mechanism further comprises a positive cutting mechanism arranged downstream of the third heating mechanism and configured to cut the positive electrode sheet.

In the above technical solution, thanks to the fact that the positive cutting mechanism is arranged downstream of the third heating mechanism, it is possible that after the positive electrode sheet is heated, the positive electrode sheet is cut to form positive electrode sheets with a smaller length so that a plurality of positive electrode sheets with a smaller length are arranged at intervals on the side of the separator away from the negative electrode sheet, or that the positive electrode sheet is indented, so as to form a stacked type electrode assembly having better electrical properties. The positive cutting mechanism is arranged downstream of the third heating mechanism, and the positive electrode sheets are softer after being heated, and are easier to cut or indent.

In some embodiments of the first aspect of the present invention, the positive delivery mechanism further comprises a second pressing roller assembly configured to press the positive electrode sheets against the separators such that the positive electrode sheets are attached to the separators.

In the above technical solution, the positive electrode sheets are pressed against the separators by the second pressing roller assembly, so that firmer connections are provided between the positive electrode sheets and the separators, and the attachment quality of the positive electrode sheets and the separators is improved.

In some embodiments of the first aspect of the present invention, the stacking device further comprises a fourth heating mechanism arranged downstream of the negative delivery mechanism and configured to heat the negative electrode sheet before the two separators are attached to the negative electrode sheet.

In the above technical solution, the fourth heating mechanism is used to heat the negative electrode sheet before the separators are attached to the negative electrode sheet, so that the glue or adhesives on the surfaces of the negative electrode sheet are softened, and the negative electrode sheet thus also has a bonding ability to facilitate the attachment of the separators on the two sides of the negative electrode sheet. In addition, heat is provided to the negative electrode sheet during attachment, and the heat of the negative electrode sheet can help to soften the glue or adhesives on the surfaces of the separators, so that the surfaces of the separators that are used to attach to the negative electrode sheet have bonding properties, facilitating the attachment of the separators to the negative electrode sheet.

In some embodiments of the first aspect of the present invention, the pressing mechanism comprises two rotating portions arranged opposite to each other, the rotating portions being rotatably mounted to the stacking platform and configured to flatten the bent segments.

In the above technical solution, each bent segment is flattened by the corresponding rotating portion, so that the structure of the stacked type structure in the laminating direction is more compact, so as to improve the quality of the stacked type structure.

In some embodiments of the first aspect of the present invention, the rotating portion comprises a brush and a main body, wherein the main body is rotatably mounted to the stacking platform, and the brush is configured to flatten the bent segments.

In the above technical solution, the material of the brush is soft, and the brush is less likely to damage the stacked type structure when the bent portion is flattened.

In some embodiments of the first aspect of the present invention, the stacking device includes a driving mechanism and two stacking platforms, wherein the driving mechanism is configured to switch the positions of the two stacking platform such that one of the stacking platforms is located in a stacking position and the other stacking platform is in a non-stacking position.

In the above technical solution, the driving mechanism can switch the positions of the two stacking platforms such that when one of the stacking platforms is located in the stacking position, the other stacking platform is in the non-stacking position, that is, the two stacking platforms work alternately, and the stacking operation will not be suspended, improving the production efficiency.

In a second aspect, the present invention provides a method for manufacturing a stacked type electrode assembly, according to claim 11.

Accordingly, the separators and the negative electrode sheet that are attached to each other are first heated so that the separators have bonding properties, the positive electrode sheets are then attached to the separators, and the glue or adhesives on the surfaces of the separators are softened before the positive electrode sheets are attached to the separators, so that the separators have bonding properties, and the positive electrode sheets can be directly bonded to the separators and delivered to the next station along with the separators. There is no need to provide a PET film feeding apparatus for supplying PET films and to fix the positive electrode sheets by means of the PET films, so that the positive electrode sheets are static relative to the PET films, the positive electrode sheets do not shift during a delivery process of the PET films, and the positive electrode sheets are transported to the next station under the drive of the PET films. The entire structure of the stacking device is simplified, and the production cost of the stacked type electrode assembly is reduced. Moreover, no PET film is provided, which also shortens the path through which heat passes, and has a stronger ability to soften the glue or adhesives on the separators, thereby improving the attachment quality.

### Description of Drawings

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present invention.
Fig. 1 is a schematic structural diagram of a stacking device in the prior art;
Fig. 2 is a schematic structural diagram of a stacking device provided in some embodiments of the present invention;
Fig. 3 is a schematic diagram of part of the structure in Fig. 2;
Fig. 4 is a schematic structural diagram of a stacked type electrode assembly that can be obtained by the present invention;
Fig. 5 is a schematic diagram of a swing mechanism provided in some embodiments of the present invention in an initial position;
Fig. 6 is a schematic diagram of the swing mechanism swinging to the left from the initial position to a first position;
Fig. 7 is a schematic diagram of the swing mechanism swinging to the right from the first position to a second position;
Fig. 8 is a schematic diagram of a blowing mechanism provided in some embodiments of the present invention in a non-blowing state;
Fig. 9 is a schematic diagram of the blowing mechanism blowing air to the right to a second laminated strip and deflecting a part of the second laminated strip by a certain angle;
Fig. 10 is a schematic structural diagram of the blowing mechanism blowing air to the right to the second laminated strip, and the second laminated strip folded downward under the action of a conveying mechanism and its own gravity;
Fig. 11 is a schematic structural diagram of a driving mechanism and two stacking platforms provided in some embodiments of the present invention;
Fig. 12 is a schematic structural diagram of a negative delivery mechanism provided in some embodiments of the present invention;
Fig. 13 is a schematic structural diagram of a separator delivery mechanism provided in some embodiments of the present invention; and
Fig. 14 is a flowchart of a method for manufacturing a stacked type electrode assembly provided in some embodiments of the present invention.

List of reference signs: 1000', 1000 - Stacking device; 100 - Negative delivery mechanism; 110 - Negative roll spool; 120 - Negative rectifying deviation sensor; 130 - Negative strip splicing mechanism; 140 - Negative tension balance mechanism; 150 - Negative rectifying deviation mechanism; 200 - Separator delivery mechanism; 210 - Second heating mechanism; 211 - Second heating assembly; 220 - First pressing roller assembly; 221 - First pressing roller; 222 - Second pressing roller; 230 - Separator roll spool; 240 - Separator rectifying deviation sensor; 250 - Separator strip splicing mechanism; 260 - Separator tension balance mechanism; 300 - First heating mechanism; 310 - First heating assembly; 400 - Positive delivery mechanism; 410 - Third heating mechanism; 411 - Third heating assembly; 4111 - Heating unit; 420 - Positive cutting mechanism; 430 - Second pressing roller assembly; 431 - Third pressing roller; 432 - Fourth pressing roller; 500 - First cleaning mechanism; 600 - Negative cutting mechanism; 700 - Second cleaning mechanism; 800 - Fourth heating mechanism; 810 - Fourth heating assembly; 900 - Stacking mechanism; 910 - Transmission mechanism; 920 - Swing mechanism; 930 - Blowing mechanism; 1100 - Stacking platform; 1200 - Pressing mechanism; 1210 - Rotating portion; 1211 - Brush; 1212 - Main body; 1300 - Driving mechanism; 1310 - First driving member; 1320 - Second driving member; 1400 - Separator makeup sealing mechanism; 1500 - Positive and negative relative position detection mechanism; 2000 - Electrode assembly; 2100 - Laminated segment; 2200 - Bent segment; 2300 - Indentation; a - Negative electrode sheet; b - Separator; c - Positive electrode sheet; d - PET film; e - Heating mechanism.

### Detailed Description

In order to make the objectives, technical solutions and advantages of the present invention clearer, embodiments of the present invention will be clearly and completely described below with reference to the accompanying drawings. The described embodiments are some of, rather than all of, the embodiments of the present invention, and are not intended to limit the scope of protection of the present invention which is defined by the appended claims.

A stacked type electrode assembly includes a negative electrode sheet, separators connected to two sides in a thickness direction of the negative electrode sheet, and a positive electrode sheet connected to the side of each separator away from the negative electrode sheet, and then a laminated strip formed by connecting the negative electrode sheet, the separators and the positive electrode sheets is repeatedly laminated to form a stacked type electrode assembly.

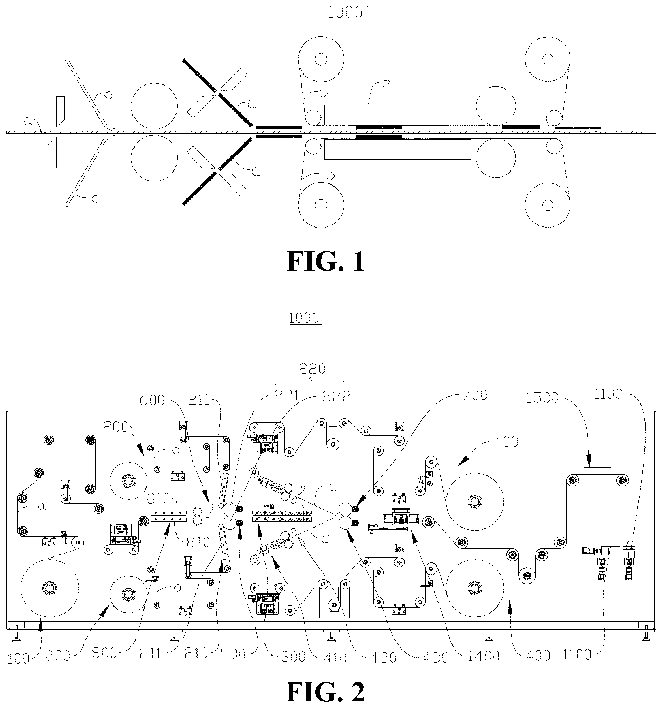

The inventors have found that, as shown in Fig. 1, in an existing stacking device 1000', a negative electrode sheet a is supplied by a negative delivery mechanism (not shown in Fig. 1), separators b are supplied by a separator delivery mechanism (not shown in Fig. 1) respectively to two sides in a thickness direction of the negative electrode sheet a, and the separators b on the two sides in the thickness direction of the negative electrode sheet a are respectively connected to the negative electrode sheet a, so that a first laminated strip including the negative electrode sheet a and the two layers of separators b is formed; then positive electrode sheets c are supplied to two sides in a thickness direction of the first laminated strip by a positive delivery mechanism (not shown in Fig. 1), and the positive electrode sheets c supplied on the two sides in the thickness direction of the first laminated strip are fixed by means of PET films (polyester films) d positive electrode sheets c, so that the positive electrode sheets c are located on the two sides in the thickness direction of the first laminated strip; and under the drive of the PET films d, the positive electrode sheets c and the first laminated strip are conveyed together to a heating mechanism e, and the heating mechanism e heats the positive electrode sheets c and the first laminated strip, so that glue or adhesives on surfaces of the separators b of the first laminated strip are softened, and the positive electrode sheet c can be connected to the separators b via the glue softened on the surfaces of the separators b to form a second laminated strip including the negative electrode sheet a, the two layers of separators b and the two layers of positive electrode sheets c. Therefore, the device for manufacturing a stacked type electrode assembly needs to be provided with a device for supplying the PET films d, which makes the entire manufacturing device larger in size and complicated in structure. The PET films d are consumables and need to be replaced frequently, which increases the production cost. Furthermore, due to the existence of the PET films d, heat from heating mechanism e needs to pass through the PET films d and the positive electrode sheets c to reach the separators b, so that a heat transfer path and time are longer, the heat loss is greater, and the heating effect on the separators b is poor. The glue or adhesives on the separators b cannot be softened sufficiently, thereby affecting the combination quality of the positive electrode sheets c and the separators b.

On this basis, the present invention provides a stacking device, in which a negative electrode sheet a and separators b arranged in a laminated manner are heated before positive electrode sheets c are attached to the separators b, so that glue or adhesives on surfaces of the separators b are softened, the separators b thus have bonding properties, and the positive electrode sheets c can be directly bonded to the separators b and delivered to the next station along with the separators b. There is no need to provide a PET film d feeding apparatus for supplying PET films d and to fix the positive electrode sheets c by means of the PET films d, so that the positive electrode sheets c are static relative to the PET films d, the positive electrode sheets c do not shift during a delivery process of the PET films d, and the positive electrode sheets c are transported to the next station under the drive of the PET films d. The entire structure of the stacking device is simplified, and the production cost of the stacked type electrode assembly 2000 is reduced. Moreover, no PET film is provided, so that the path through which heat passes is also shortened, and a stronger ability to soften the glue or adhesives on the separators is provided, thereby improving the attachment quality.

Fig. 2 is a schematic structural diagram of a stacking device 1000 provided in some embodiments of the present invention. The stacking device 1000 includes a negative delivery mechanism 100, a separator delivery mechanism 200, a first heating mechanism 300 and a positive delivery mechanism 400. The negative delivery mechanism 100 is configured to deliver a negative electrode sheet a. The separator delivery mechanism 200 is configured to deliver separators b to two sides of the negative electrode sheet a, such that the separators b are attached to the negative electrode sheet a. The first heating mechanism 300 is arranged downstream of the separator delivery mechanism 200, and the first heating mechanism 300 is configured to heat the negative electrode sheet a and the separators b. The positive delivery mechanism 400 is arranged downstream of the first heating mechanism 300, and the positive delivery mechanism 400 is configured to deliver positive electrode sheets c to the two sides of the negative electrode sheet a, such that the positive electrode sheets c are attached to the separators b.

The separator delivery mechanism 200 attaches the separators b to the negative electrode sheet a, which may mean that the separators b are in contact with the negative electrode sheet a but not connected thereto, or that the separators b are connected to the negative electrode sheet a. The positive delivery mechanism 400 attaches the positive electrode sheets c to the separator b, which may mean that the positive electrode sheets c are in contact with the separators b but not connected thereto, or that the positive electrode sheets c are connected to the separators b.

It should be noted that the terms "upstream" and "downstream" mentioned above and below in the embodiments of the present disclosure refer to orders in a production sequence, and are not intended to limit spatial positions of the respective components. Upstream refers to an earlier production sequence, and downstream refers to a later production sequence.

The glue or adhesives on the surfaces of the separators b may be a mixture of PVDF (poly(1,1-difluoroethylene), polyvinylidene fluoride) and styrene butadiene rubber. Of course, glue of other materials may also be used. In some embodiments, glue may also be provided on the two sides, to which the separators b are attached, of the negative electrode sheet a.

The heating method of the first heating mechanism 300 may be thermal radiation, contact-type flat-pressing or rolling.

Thanks to the fact that the first heating mechanism 300 is arranged downstream of the separator delivery mechanism 200, the first heating mechanism 300 is used to heat the negative electrode sheet a and the separators b, and the positive delivery mechanism 400 for delivering the positive electrode sheets c to the two sides of the negative electrode sheet a is arranged downstream of the first heating mechanism 300, the first heating mechanism 300 can heat the negative electrode sheet a and the separators b that are arranged in a laminated manner before the positive electrode sheets c are attached to the separators b, so as to soften glue or adhesives on surfaces of the separators b, so that the separators b have bonding properties, and the positive electrode sheets c can be directly bonded to the separators b and delivered to the next station along with the separators b. There is no need to provide a PET film (Polyester Film) feeding apparatus for supplying PET films d (shown in Fig. 1) and to fix the positive electrode sheets c by means of the PET films d, so that the positive electrode sheets c are static relative to the PET films d, the positive electrode sheets c do not shift during a delivery process of the PET films d, and the positive electrode sheets c, the separators b and the negative electrode sheet a are transported to the next station under the drive of. The entire structure of the stacking device 1000 is simplified, and the production cost of the stacked type electrode assembly 2000 is reduced. Moreover, no PET film is provided, so that the path through which heat passes is also shortened, and a stronger ability to soften the glue or adhesives on the separators is provided, thereby improving the attachment quality. Furthermore, the first heating mechanism 300 also heats the negative electrode sheet a, if there is glue or adhesives on the two sides, to which the separators b are attached, of the negative electrode sheet a, the glue or adhesives may also be softened, so that the negative electrode sheet a also has bonding properties, and the negative electrode sheet a and the separators b are bonded to each other.

It should be noted that in the present invention, a class of organic or inorganic, natural or synthetic substances that can connect the same or two or more homogeneous or heterogeneous parts (or materials) together and have sufficient strength after curing are collectively referred to as pastes, adhesives, or binders, and are customarily referred to as glue.

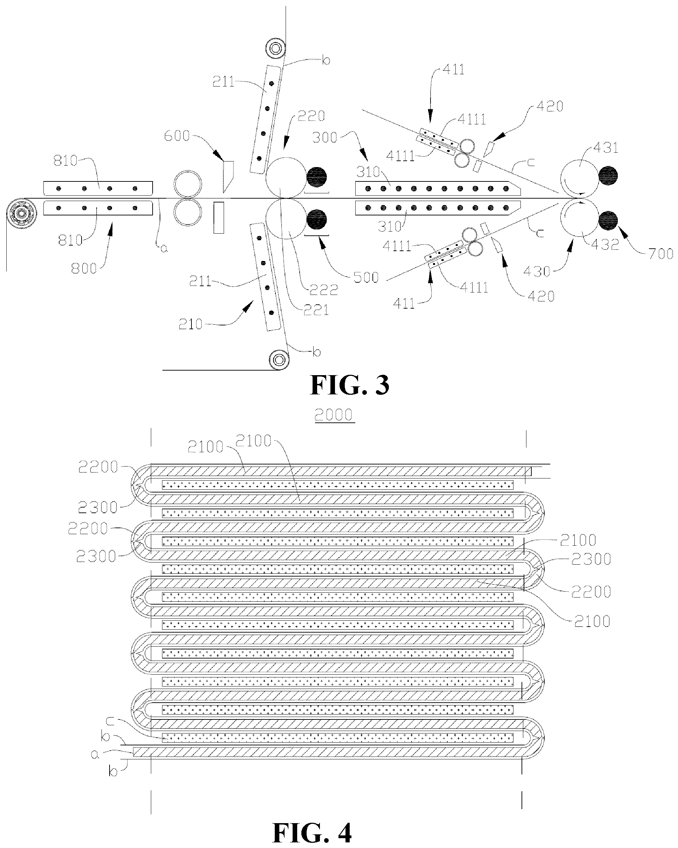

Referring to Figs. 2 and 3, Fig. 3 is a schematic diagram of the relative relationship between the negative electrode sheet a, the separators b and two first heating assemblies 310. In some embodiments, the first heating mechanism 300 comprises two first heating assemblies 310. The two first heating assemblies 310 are respectively located on the two sides of the negative electrode sheet a, and the two first heating assemblies 310 are respectively used for heating the separators b on the two sides of the negative electrode sheet a and the negative electrode sheet a.

The two first heating assemblies 310 are respectively located on the two sides of the negative electrode sheet a, which means that the two first heating assemblies 310 are each located on the side, away from the negative electrode sheet a, of a respective one of the separators b on the two sides of the negative electrode sheet a. That is, the first heating assembly 310 is arranged on the side of the corresponding separator b away from the negative electrode sheet a. The heating method of the first heating mechanism 300 may be thermal radiation, contact-type flat-pressing, rolling, etc. The first heating mechanism 300 adopts thermal radiation heating, which may be heating by means of a resistance wire and a metal plate, or infrared heating, or UV (ultraviolet radiation) furnace heating, or heating by means of a heating silicone rubber sheet. In other embodiments, the first heating mechanism 300 may include only one first heating assembly 310, and the separators b on the two sides of the negative electrode sheet a are heated by the one first heating assembly 310.

When the first heating mechanism 300 includes two first heating assemblies 310 and the two first heating assemblies 310 are respectively located on the two sides of the negative electrode sheet a for heating the separators b on the two sides of the negative electrode sheet a, the two separators b are both sufficiently heated, so that the glue or adhesives on the surfaces of the two separators b are sufficiently softened to provide stronger bonding properties.

Referring to Figs. 2 and 3, according to the invention, the separator delivery mechanism 200 includes a second heating mechanism 210. The second heating mechanism 210 is configured to heat the two separators b before the two separators b are attached to the negative electrode sheet a.

The heating method of the second heating mechanism 210 may be thermal radiation, contact-type flat-pressing, rolling, etc. The second heating mechanism 210 adopts thermal radiation heating, which may be heating by means of a resistance wire and a metal plate, or infrared heating, or UV (ultraviolet radiation) furnace heating, or heating by means of a heating silicone rubber sheet.

The second heating mechanism 210 is used to heat the separators b before the separators b are attached to the negative electrode sheet a, so that the glue or adhesives on the separators b are softened, the separators b then have bonding properties before being attached to the negative electrode sheet a, and the separators b can be bonded to the negative electrode sheet a and conveyed to the first heating mechanism 300, facilitating the subsequent attachment of the positive electrode sheets c to the negative electrode sheet a.

It is necessary to attach the separators b to both sides of the negative electrode sheet a, so two separators b are provided. In some embodiments, the second heating mechanism 210 includes two second heating assemblies 211. The two second heating assemblies 211 are respectively configured to heat the two separators b.

The two second heating assemblies 211 respectively heat the two separators b, which means that each separator b is provided with a corresponding second heating assembly 211, and the separator b is heated by the corresponding second heating mechanism 210 to soften the glue on the surfaces. The second heating mechanism 210 adopts thermal radiation heating, which may be heating by means of a resistance wire and a metal plate, or infrared heating, or UV (ultraviolet radiation) furnace heating, or heating by means of a heating silicone rubber sheet. In other embodiments, the second heating mechanism 210 may also include only one second heating assembly 211, and the two separators b are heated by the one second heating assembly 211.

When the second heating mechanism 210 includes two second heating assemblies 211 and the two second heating assemblies 211 respectively heat the two separators b, the glue or adhesives on the surfaces of the separators b can be sufficiently softened and the uniformity of heating of the two separators b can be improved, thereby improving the attachment quality of the separators b and the negative electrode sheet a.

According to the invention, the second heating mechanism 210 is configured to heat the side of the separator b that is used to attach to the negative electrode sheet a.

The second heating mechanism 210 is configured to heat the side of the separator b that is used to attach to the negative electrode sheet a, which means that the second heating mechanism 210 is arranged on the side of the separator b that is used to attach to the negative electrode sheet a, to sufficiently heat the side of the separator b that is used to attach to the negative electrode sheet a.

One side in a thickness direction of the separator b is used to connect to the negative electrode sheet a. In the embodiment where the second heating mechanism 210 includes two second heating assemblies 211, each second heating assembly 211 is arranged on the side of the corresponding separator b that is used to attach to the negative electrode sheet a, so that the side of the separator b that is used to attach to the negative electrode sheet a can be sufficiently heated, the glue or adhesive on the side of the separator b that is used to attach to the negative electrode sheet a can be thus sufficiently softened, and the side of the separator b that is used to attach to the negative electrode sheet a has stronger bonding properties.

In some embodiments, the second heating mechanism 210 may also be used to heat the two sides of the separator b. That is, the second heating mechanism 210 is used to heat the side of the separator b that is used to attach to the negative electrode sheet a and the side of the separator b away from the negative electrode sheet a. The two sides of each separator b may be respectively provided with corresponding second heating assemblies 211, so as to heat the two sides of the separator b.

Referring to Figs. 2 and 3, in some embodiments, the separator delivery mechanism 200 further includes a first pressing roller assembly 220. The first pressing roller assembly 220 is arranged downstream of the second heating mechanism 210 and upstream of the first heating mechanism 300, and the first pressing roller assembly 220 is configured to press the separators b against the negative electrode sheet a such that the separators b are attached to the two sides of the negative electrode sheet a.

The first pressing roller assembly 220 includes a first pressing roller 221 and a second pressing roller 222. The first pressing roller 221 and the second pressing roller 222 are respectively located on the two sides of the negative electrode sheet a, and each of the first pressing roller 221 and the second pressing roller 222 is located on the side of a respective one of the two separators b away from the negative electrode sheet a, so that the negative electrode sheet a and the two separators b are attached to form a first laminated strip.

The separators b are heated by the corresponding second heating mechanism 210 to soften the glue or adhesives on the surfaces, and are rolled by the first pressing roller assembly 220 so that the separators b and the negative electrode sheet a are adhered together by means of the glue. The first pressing roller assembly 220 has a rolling pressure in the range of 100 KG - 1000 KG. The advantage of this process is that the negative electrode sheet a is bonded to the separators b in advance, thereby avoiding the deflection phenomenon caused by the instantaneous tension loss of the negative electrode sheet a after cutting. The separators b located on the two sides of the negative electrode sheet a are pressed against the negative electrode sheet a by the first pressing roller assembly 220, so that firmer connections are provided between the separators b and the negative electrode sheet a, and the attachment quality of the separators b and the negative electrode sheet a is improved. After the first pressing roller assembly 220 presses the separators b against the negative electrode sheet a, the two separators b are attached to the two sides of the negative electrode sheet a, which means that the two separators b are bonded to the two sides of the negative electrode sheet a.

Since there is glue on the surfaces of the separators b, during the process of pressing the separators b against the negative electrode sheet a by the first pressing roller assembly 220, the glue will be adhered to peripheral surfaces of the first pressing roller 221 and the second pressing roller 222 when the first pressing roller 221 and the second pressing roller 222 of the first pressing roller assembly 220 come into contact with the separators b, resulting in that the first pressing roller 221 and the second pressing roller 222 may be both bonded to and pull the separators b, and after the first pressing roller assembly 220 operates for a long time, dust will be adhered to the peripheral surfaces of the first pressing roller 221 and the second pressing roller 222, which will affect the compression effect of the first pressing roller assembly 220 on the separators b and the negative electrode sheet a. As shown in Figs. 2 and 3, in some embodiments, the stacking device 1000 further includes a first cleaning mechanism 500. The first cleaning mechanism 500 is used to clean the dust and the glue adhered to the first pressing roller assembly 220. The first cleaning mechanism 500 may include a scraper for scraping off the glue or the dust on the first pressing roller 221 and the second pressing roller 222, and a sweeping brush for sweeping the glue or the dust on the first pressing roller 221 and the second pressing roller 222.

As shown in Figs. 2 and 3, in some embodiments, the positive delivery mechanism 400 includes a third heating mechanism 410. The third heating mechanism 410 is configured to heat the positive electrode sheets c before the positive electrode sheets c are attached to the separators b.

The third heating mechanism 410 is used to heat the positive electrode sheets c before the positive electrode sheets c are attached to the separators b, so that the glue or adhesives on the surfaces of the positive electrode sheets c are softened, and the positive electrode sheets c also have a bonding ability to facilitate the attachment of the positive electrode sheets c to the separators b. In addition, providing heat to the positive electrode sheets c during attachment can compensate for the heat loss during the conveying of the separators b to the positive electrode sheets c to be attached thereto, so that the glue or adhesives on the separators b remain in a softened state, facilitating the provision of stronger bonding properties for the surfaces of the separators b that are used to attach to the positive electrode sheets c, and improving the attachment quality of the positive electrode sheets c attached to the separators b.

Since each positive electrode sheet c is attached to the side of a respective one of the two separators b away from the negative electrode sheet a, in some embodiments, the third heating mechanism 410 includes two third heating assemblies 411, and the two third heating assemblies 411 are respectively configured to heat the corresponding positive electrode sheets c.

The two third heating assemblies 411 respectively heat the corresponding positive electrode sheets c. In other words, each positive electrode sheet c is provided with a corresponding third heating assembly 411, and the positive electrode sheet c is heated by the corresponding third heating mechanism 410 to soften the glue or adhesives on the surface.

The third heating mechanism 410 adopts thermal radiation heating, which may be heating by means of a resistance wire and a metal plate, or infrared heating, or UV (ultraviolet radiation) furnace heating, or heating by means of a heating silicone rubber sheet. In other embodiments, the third heating mechanism 410 may include only one third heating assembly 411, and the two positive electrode sheets c are heated by the one third heating assembly 411.

When the third heating mechanism 410 includes two third heating assemblies 411, the two third heating assemblies 411 are respectively configured to heat the corresponding positive electrode sheet c, so that each positive electrode sheet c can be sufficiently heated, and the glue or adhesives on the surfaces of the separators b are sufficiently softened. Each positive electrode sheet c has a relatively high heat when it is attached to the corresponding separator b, which compensates for the heat loss during the conveying of the separator b to the positive electrode sheet c to be attached thereto and reduces the heat loss of the separator b, so that the glue or adhesive on the separator b remains in a softened state, and the separator b thus has better bonding properties.

In some embodiments, the third heating assembly 411 is configured to heat two sides of the corresponding positive electrode sheet c.

The third heating assembly 411 includes two heating units 4111, and the two heating units 4111 are respectively located on the two sides in a thickness direction of the corresponding positive electrode sheet c, so that the two heating units 4111 heat the two sides in the thickness direction of the corresponding positive electrode sheet, and the positive electrode sheet c is thus heated evenly in the thickness direction.

The third heating assembly 411 is configured to heat the corresponding positive electrode sheet c on the two sides of the positive electrode sheet c, so that each positive electrode sheet c can be sufficiently heated in the thickness direction of the positive electrode sheet c, and the glue or adhesive on the positive electrode sheet c is thus softened and has a bonding ability. Heating the positive electrode sheet c can also make the positive electrode sheet c have higher heat, which can compensate for the heat loss during the conveying of the separators to the positive electrode sheets to be attached thereto, and reduce the heat loss of the separators, so that the glue or adhesives on the separators remain in a softened state, facilitating the provision of stronger bonding properties for the surfaces of the separators that are used to attach to the positive electrode sheets, and improving the attachment quality of the positive electrode sheets attached to the separators.

Referring to Figs. 2 and 3, in some embodiments, the positive delivery mechanism 400 further includes a positive cutting mechanism 420. The positive cutting mechanism 420 is arranged downstream of the third heating mechanism 410, and the positive cutting mechanism 420 is configured to cut the positive electrode sheet c.

The positive cutting mechanism 420 is configured to cut the positive electrode sheet c, which means that the positive cutting mechanism 420 is used to cut the positive electrode sheet c to form positive electrode sheets c with a smaller length, or to indent the positive electrode sheet c on the surface of the positive electrode sheet c, to facilitate subsequent bending to form the stacked type electrode assembly 2000.

Since the positive electrode sheets c are provided on the two sides of the negative electrode sheet a, each positive electrode sheet c may be provided with a corresponding positive cutting mechanism 420.

The positive cutting mechanism 420 can adopt mechanical knife cutting, laser cutting, dust gun cutting, electron beam cutting, ultrasonic knife cutting, and other methods capable of cutting the electrode sheet. After the positive electrode sheet c is cut off, the positive electrode sheet c is attached to the side of the respective separator b away from the negative electrode sheet a. The structure of the positive cutting mechanism 420 can refer to the existing cutting mechanism, and will not be repeated here.

Thanks to the fact that the positive cutting mechanism 420 is arranged downstream of the third heating mechanism 410, it is possible that after the positive electrode sheet c is heated, the positive electrode sheet c is cut to form positive electrode sheets c with a smaller length so that a plurality of positive electrode sheets c with a smaller length negative at intervals on the side of the separator b away from the negative electrode sheet a, or the positive electrode sheet c is indented, so as to form a stacked type electrode assembly 2000 having better electrical properties. The positive cutting mechanism 420 is arranged downstream of the third heating mechanism 410, and the positive electrode sheets c are softer after being heated, and are easier to cut or indent.

Referring to Figs. 2 and 3, in some embodiments, the stacking device 1000 further includes a negative cutting mechanism 600. The negative cutting mechanism 600 is arranged downstream of the negative delivery mechanism 100 and upstream of the first pressing roller assembly 220. The negative cutting mechanism 600 is configured to cut the negative electrode sheet a, and cut off the negative electrode sheet a after the negative electrode sheet a completes the feeding of one stacked type electrode assembly 2000. Alternatively, the negative cutting mechanism 600 is used to form an indentation 2300 (shown in Fig. 4 ) on the negative electrode sheet a, on the surface of the negative electrode sheet a, so as to facilitate subsequent bending to form the stacked type electrode assembly 2000. The negative cutting mechanism 600 forms the indentation 2300 on the negative electrode sheet a in such a way that the indentation 2300 may be formed by laser cleaning a coating, laser cutting, mechanical knife punching, mechanical sharp edge pressing, dust gun, electron beam/ultrasonic knife, etc.

Referring to Figs. 2 and 3, in some embodiments, the positive delivery mechanism 400 further includes a second pressing roller assembly 430. The second pressing roller assembly 430 is configured to press the positive electrode sheets c against the separators b such that the positive electrode sheets c are attached to the separators b.

The second pressing roller assembly 430 is used to press the positive electrode sheets c against the separators b after the negative electrode sheet a and the separators b are heated by the first heating mechanism 300 and the positive electrode sheets c are cut by the positive cutting mechanisms 420. The second pressing roller assembly 430 includes a third pressing roller 431 and a fourth pressing roller 432. The third pressing roller 431 and the fourth pressing roller 432 are respectively located on the two sides of the negative electrode sheet a, and each of the third pressing roller 431 and the fourth pressing roller 432 is located on the side of the respective positive electrode sheet c away from the separator b, so that the first laminated strip and the positive electrode sheets c on the two sides are attached to form a second laminated strip. In other words, the negative electrode sheet a, the two separators b and the two layers of positive electrode sheets c are attached to form a second laminated strip. During the process of pressing the positive electrode sheets c against the surfaces of the separators b, the second pressing roller assembly 430 can also assist in delivering the negative electrode sheet a, the separators b and the positive electrode sheets c to the next station.

The separators b are heated by the first heating mechanism 300 to soften the glue or adhesives on the surfaces, and are rolled by the second pressing roller assembly 430 so that the separators b and the positive electrode sheets c are adhered together by means of the glue. When the second pressing roller assembly 430 presses the positive electrode sheets c against the separators b, the pressing force provided by the second pressing roller assembly 430 may refer to the first pressing roller assembly 220 or may be set according to actual requirements. After the second pressing roller assembly 430 presses the positive electrode sheets c against the separators b, each positive electrode sheet c is attached to the side of the corresponding separator b away from the negative electrode sheet a, which means that each positive electrode sheet c is bonded to the side of the corresponding separator b away from the negative electrode sheet a. During the process of pressing the separators b against the surfaces of the negative electrode sheet a, the first pressing roller assembly 220 can also assist in delivering the negative electrode sheet a and the separators b to the next station.

The positive electrode sheets c are pressed against the separators b by the second pressing roller assembly 430, so that firmer connections are provided between the positive electrode sheets c and the separators b, and the attachment quality of the positive electrode sheets c and the separators b is improved.

Since there may be glue on the surfaces of the positive electrode sheets c, during the process of pressing the positive electrode sheets c against the separators b by the second pressing roller assembly 430, the glue will be adhered to peripheral surfaces of the third pressing roller 431 and the fourth pressing roller 432 when the third pressing roller 431 and the fourth pressing roller 432 of the second pressing roller assembly 430 come into contact with the positive electrode sheets c, resulting in that the third pressing roller 431 and the fourth pressing roller 432 may be both bonded to and pull the separators b, and after the second pressing roller assembly 430 operates for a long time, dust will be adhered to the peripheral surfaces of the third pressing roller 431 and the fourth pressing roller 432, which will affect the compression effect of the second pressing roller assembly 430 on the separators b and the positive electrode sheets c. As shown in Figs. 2 and 3, in some embodiments, the stacking device 1000 includes a second cleaning mechanism 700. The second cleaning mechanism 700 is used to clean the dust and the glue adhered to the second pressing roller assembly 430. The first cleaning mechanism 500 may include a scraper for scraping off the glue or the dust on the third pressing roller 431 and the fourth pressing roller 432, and a sweeping brush for sweeping the glue or the dust on the third pressing roller 431 and the fourth pressing roller 432.

Referring to Figs. 2 and 3, in some embodiments, the stacking device 1000 further includes a fourth heating mechanism 800. The fourth heating mechanism 800 is arranged downstream of the negative delivery mechanism 100, and the fourth heating mechanism 800 is configured to heat the negative electrode sheet a before the two separators b are attached to the negative electrode sheet a.

The fourth heating mechanism 800 may include two fourth heating assemblies 810. The two fourth heating assemblies 810 are respectively located on the two sides in the thickness direction of the negative electrode sheet a, so that the two fourth heating assemblies 810 respectively heat the two sides in the thickness direction of the negative electrode sheet a. In other embodiments, the fourth heating mechanism 800 may also include only one fourth heating assembly 810, and the negative electrode sheet a is heated by the one fourth heating assembly 810.

The fourth heating mechanism 800 adopts thermal radiation heating, which may be heating by means of a resistance wire and a metal plate, or infrared heating, or UV (ultraviolet radiation) furnace heating, or heating by means of a heating silicone rubber sheet.

The fourth heating mechanism 800 is used to heat the negative electrode sheet a before the separators b are attached to the negative electrode sheet a, so that the glue or adhesives on the surfaces of the negative electrode sheet a are softened, and the negative electrode sheet a thus also has a bonding ability to facilitate the attachment of the separators b on the two sides of the negative electrode sheet a. In addition, heat is provided to the negative electrode sheet a during attachment, and the heat of the negative electrode sheet a can help to soften the glue or adhesives on the surfaces of the separators b, so that the surfaces of the separators b that are used to attach to the negative electrode sheet a have bonding properties, facilitating the attachment of the separators b to the negative electrode sheet a.

Referring to Fig. 4, Fig. 4 is a schematic structural diagram of a stacked type electrode assembly 2000 provided in some embodiments of the present invention. The stacked type structure includes a plurality of bent segments 2200 and a plurality of laminated segments 2100 arranged in a laminated manner. Each bent segment 2200 is used to connect two adjacent laminated segments 2100, the laminated segments 2100 are laminated in a first direction, two adjacent laminated segments 2100 are connected to each other via one bent segment 2200, and the bent segments 2200 are bent portions where the negative electrode sheet a, the two layers of separators b and the two layers of positive electrode sheets c that are attached to one other are repeatedly folded. In the embodiment in which a plurality of positive electrode sheets c with a smaller length arranged at intervals are attached to the side of the separator b away from the negative electrode sheet a, the positive electrode sheet c is part of the laminated segment 2100.

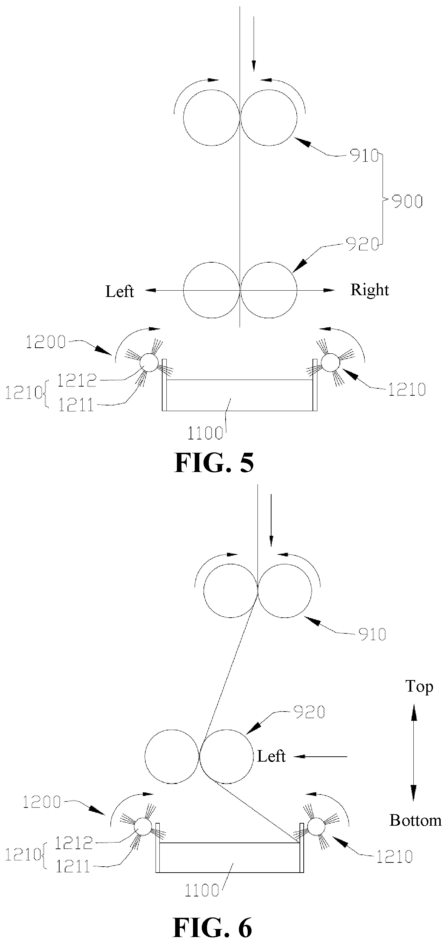

As shown in Figs. 5-10, in some embodiments, the stacking device 1000 includes a stacking mechanism 900, a stacking platform 1100, and a pressing mechanism 1200. The stacking mechanism 900 is arranged downstream of the positive delivery mechanism 400, and the stacking mechanism 900 is configured to arrange the negative electrode sheet a, the separators b and the positive electrode sheets c on the stacking platform 1100 in a laminated manner to form a stacked type structure. The stacked type structure includes a plurality of bent segments 2200 and a plurality of stacked laminated segments 2100 arranged in a laminated manner, and each bent segment 2200 is used to connect two adjacent laminated segments 2100. The stacking platform 1100 is configured to carry the stacked type structure. The pressing mechanism 1200 is arranged at the stacking platform 1100, and the pressing mechanism 1200 is configured to flatten the bent segments 2200.

The stacked type structure is part or all of the stacked type electrode assembly 2000.

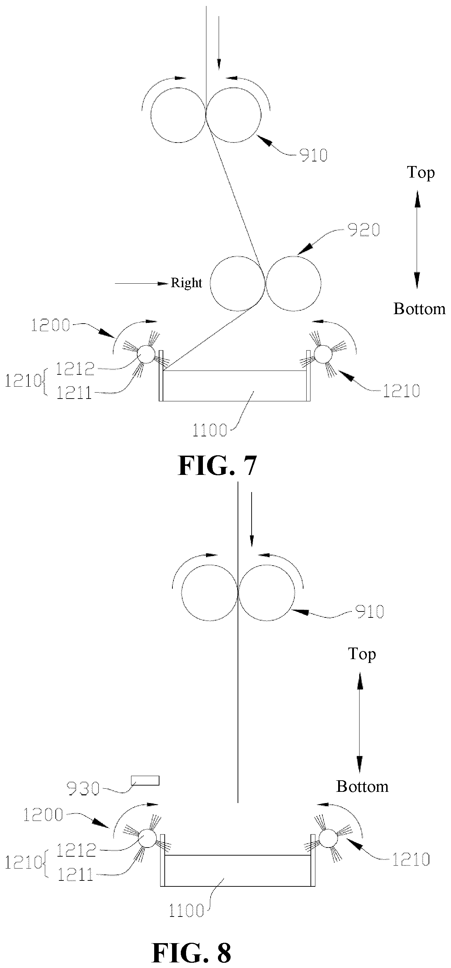

There are many ways to realize the repeated folding of the negative electrode sheet a, the two layers of separators b and the two layers of positive electrode sheets c that are attached to one other. For example, as shown in Figs. 5-7, in some embodiments, the stacking mechanism 900 includes a transmission mechanism 910 and a swing mechanism 920. The swing mechanism 920 is arranged downstream of the transmission mechanism 910. The transmission mechanism 910 is used to convey the second laminated strip to the swing mechanism 920. The swing mechanism 920 is used to drive the second laminated strip to swing left and right to realize repeated folding, and the transmission mechanism 910 is used to convey the second laminated strip from top to bottom. Fig. 5 shows a schematic diagram of the swing mechanism 920 in an initial position. When the swing mechanism 920 is in the initial position, the swing mechanism 920 is located directly below the transmission mechanism 910. The transmission mechanism 910 can convey the second laminated strip to the swing mechanism 920. Fig. 6 shows a schematic diagram of the swing mechanism 920 in a first position. As shown in Fig. 6, the swing mechanism 920 drives the second laminated strip to swing to the left from the initial position to the first position, and a laminated segment 2100 is formed during the swinging process. Fig. 7 shows a schematic diagram of the swing mechanism 920 in a second position. As shown in Fig. 7, the swing mechanism 920 drives the second laminated strip to swing to the right from the first position to the second position, and a further laminated segment 2100 is formed during the swinging process. Under the combined action of the transmission mechanism 910, the gravity of the second laminated strip and the swing mechanism 920, the second laminated strip forms a stacked type structure on the stacking platform 1100.

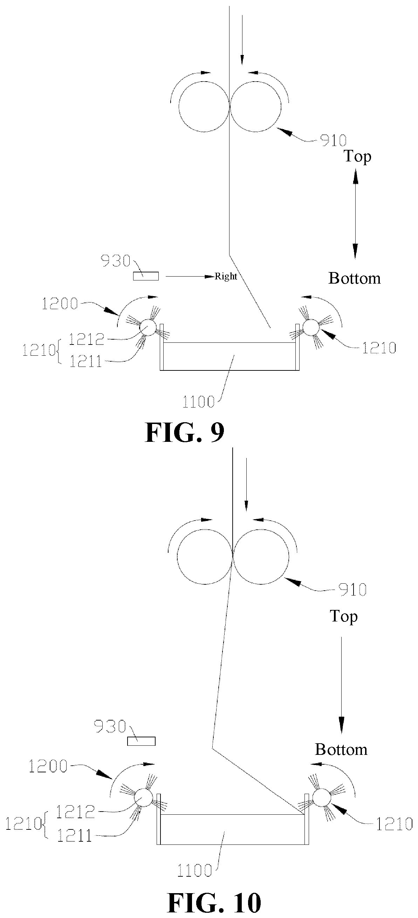

For another example, as shown in Figs. 8-9, in some embodiments, the stacking mechanism 900 further includes a transmission mechanism 910 and blowing mechanisms 930. The blowing mechanisms 930 are arranged downstream of the transmission mechanism 910, the transmission mechanism 910 is used to convey the second laminated strip to the blowing mechanisms 930, and the blowing mechanisms 930 are each arranged on one side in a thickness direction of a second composite mechanism, and the blowing mechanisms 930 blow air to the second laminated strip, so that the second laminated strip repeatedly swings in a direction in which the two blowing mechanisms 930 are arranged. Under the combined action of the transmission mechanism 910, the gravity of the second laminated strip and the blowing mechanisms 930, the second laminated strip forms a stacked type structure on the stacking platform 1100. Fig. 8 shows a schematic structural diagram of the blowing mechanism 930 not blowing air to the second laminated strip, with the transmission mechanism 910 being used to convey the second laminated strip from top to bottom. Fig. 9 shows a schematic diagram of the blowing mechanism 930 blowing air to the right to the second laminated strip and deflecting a part of the second laminated strip by a certain angle, and Fig. 10 shows a schematic structural diagram of the blowing mechanism 930 blowing air to the right to the second laminated strip, and the second laminated strip folded downward under the action of a conveying mechanism and its own gravity.

The structure of the newly formed stacked type structure is fluffy and uneven, especially in the bent segments 2200 (shown in Fig. 4 ), where the fluffy and uneven phenomena are more serious. The pressing mechanism 1200 is used to flatten the bent segments 2200 of the stacked type structure, so as to make the structure of the stacked type structure more compact in a laminating direction and improve the quality of the stacked type structure.

In some embodiments, the pressing mechanism 1200 includes two rotating portions 1210 arranged opposite to each other. The rotating portions 1210 are rotatably mounted to the stacking platform 1100, and the rotating portions 1210 are configured to flatten the bent segments 2200.

As shown in Fig. 4, in a width direction of the laminated segments 2100, the stacked type structure has two groups of bent segments 2200 arranged opposite to each other, and the indentations 2300 formed on the negative electrode sheet a by the negative cutting mechanism 600 are located at the bent segments 2200. It can be understood that the second laminated strip is folded along the indentations 2300. The pressing mechanism 1200 includes two rotating portions 1210 arranged opposite to each other. A direction in which the two rotating portions 1210 are arranged is the same as the width direction of the laminated segments 2100. The two rotating portions 1210 are respectively used to flatten the two groups of bent segments 2200 arranged opposite to each other in the width direction of the laminated segments 2100. It should be noted that the width direction of the laminated segments 2100 is consistent with the reciprocating direction of the swing mechanism 920 (shown in Figs. 5-7), and the width direction of the laminated segments 2100 is consistent with the blowing direction of the blowing mechanism (shown in Figs. 8-10).

Each bent segment 2200 is flattened by the corresponding rotating portion 1210, so that the structure of the stacked type structure in the laminating direction is more compact, so as to improve the quality of the stacked type structure.

As shown in Fig. 10, in some embodiments, the rotating portion 1210 includes a brush 1211 and a main body 1212. The main body 1212 is rotatably mounted to the stacking platform 1100, and the brush 1211 is configured to flatten the bent segments 2200.

The rotating portion 1210 includes a plurality of brushes 1211. The plurality of brushes 1211 are arranged on the main body 1212 at intervals around a rotation axis of the main body 1212. The rotation of the main body 1212 drives the rotation of the brushes 1211. During the rotation, the brushes 1211 will beat the corresponding bent segments 2200 to flatten the bent segments 2200. The rotation of the main body 1212 should make the brushes 1211 beat the bent segments 2200 from top to bottom.

The material of the brush 1211 is soft, and the brush 1211 is less likely to damage the stacked type structure when the bent segment 2200 is flattened.

In some embodiments, the pressing mechanism 1200 may also be a thin steel sheet or a beating plate.

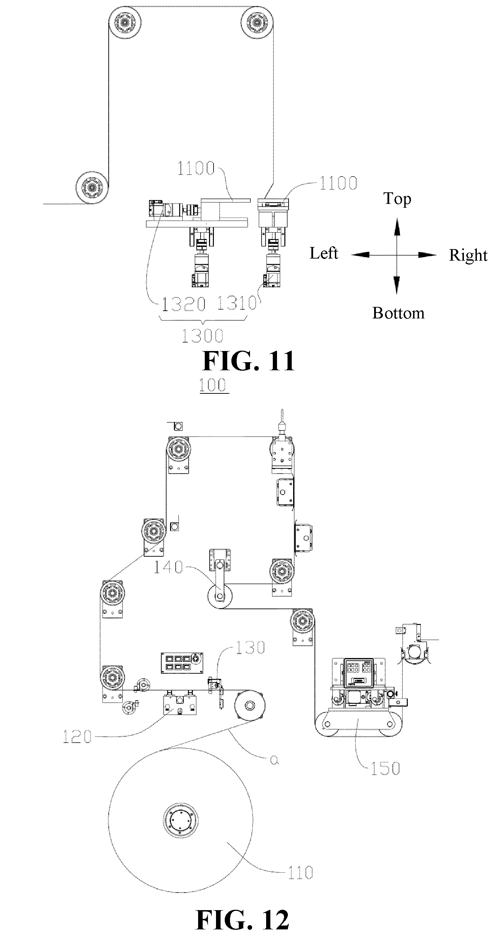

As shown in Fig. 11, in some embodiments, the stacking device 1000 includes a driving mechanism 1300 and two stacking platforms 1100. The driving mechanism 1300 is configured to switch the positions of the two stacking platforms 1100 such that one of the stacking platforms 1100 is located in a stacking position and the other stacking platform 1100 is in a non-stacking position.

In some embodiments, the driving mechanism 1300 includes a first driving member 1310 and a second driving member 1320. The first driving member 1310 is used to drive one of the stacking platforms 1100 in a vertical direction so that the stacking platform 1100 is moved in the vertical direction, and the second driving member 1320 is used to drive the other stacking platform 1100 to move in a horizontal direction, so as to switch between the stacking position and the non-stacking position. In Fig. 10, the first driving member 1310 drives the corresponding stacking platform 1100 to move downward so that the stacking platform 1100 can move to the non-stacking position, and the first driving member 1310 drives the corresponding stacking platform 1100 to move upward so that the stacking platform 1100 can move to the stacking position. The second driving member 1320 drives the corresponding stacking platform 1100 to move horizontally to the left so that the stacking platform 1100 can move to the non-stacking position, and the second driving member 1320 drives the corresponding stacking platform 1100 to move horizontally to the right so that the stacking platform 1100 can move to the stacking position.

When the first driving member 1310 drives the corresponding stacking platform 1100 to move to the non-stacking position, the stacking position is made available for the stacking platform 1100 corresponding to the second driving member 1320, so that the second driving member 1320 drives the corresponding stacking platform 1100 to move to stacking position. When the second driving member 1320 drives the corresponding stacking platform 1100 to move to the non-stacking position, the stacking position is made available for the stacking platform 1100 corresponding to the first driving member 1310, so that the first driving member 1310 drives the corresponding stacking platform 1100 to move to stacking position.

The first driving member 1310 and the second driving member 1320 may be air cylinders, hydraulic cylinders, linear motors, etc. In other embodiments, the driving mechanism 1300 may also drive the two stacking platforms 1100 to switch between the stacking position and the non-stacking position in other ways or in other driving directions.

The driving mechanism 1300 can switch the positions of the two stacking platforms 1100 such that when one of the stacking platforms 1100 is in the stacking position, the other stacking platform 1100 is in the non-stacking position, that is, the two stacking platforms 1100 work alternately, and the stacking operation will not be suspended, improving the production efficiency.

In some embodiments, the stacking device 1000 further includes a separator makeup sealing mechanism 1400. The separator makeup sealing mechanism 1400 is arranged downstream of the second rolling assembly and upstream of the stacking mechanism 900, and the separator makeup sealing mechanism 1400 is used for partial makeup sealing on two sides of the fold (the bent portion when forming the stacked type electrode assembly 2000) between the negative electrode sheet a and each separator b, so as to prevent the separator b from turning inward during the folding process. The makeup sealing method may be flat pressing or rolling.

Referring to Figs. 2 and 12, Fig. 12 is a schematic structural diagram of a negative delivery mechanism 100 provided in some embodiments of the present invention. In some embodiments, the negative delivery mechanism 100 includes a negative roll spool 110, a negative rectifying deviation sensor 120, a negative strip splicing mechanism 130, a negative tension balance mechanism 140 and a negative rectifying deviation mechanism 150.

The negative roll spool 110 may adopt single-roll negative unrolling. In practical applications, in order to increase the time for assisting in replacing the roll, the negative roll spool 110 may also be a multi-roll spool. Multi-roll refers to two or more rolls. The negative roll spool 110 is driven to rotate by a servo motor to achieve the purpose of unrolling the negative electrode sheet a. The negative roll spool 110 may refer to an existing winding machine, and will not be repeated here.

The negative rectifying deviation sensor 120 is arranged downstream of the negative roll spool 110. The negative rectifying deviation sensor 120 is used to detect whether the negative electrode sheet a deviates from a preset conveying path. It is necessary to adjust the conveying path of the negative electrode sheet a when deviating from the preset conveying path. For example, the negative roll spool 110 may be moved to rectify the deviation. For example, the negative roll spool 110 may be moved in a direction perpendicular to a strip running direction to achieve rectifying deviation.

The negative strip splicing mechanism 130 is arranged upstream of the negative rectifying deviation sensor 120. The negative strip splicing mechanism 130 is used to connect the end of a negative electrode sheet a of a negative roll that is completely unrolled to the end of a negative electrode sheet a of another negative roll, so as to realize strip splicing.

The negative tension balance mechanism 140 is arranged downstream of the negative rectifying deviation sensor 120, and is used to adjust the tension of the negative electrode sheet a, so that the tension of the negative electrode sheet a is kept within a certain range. The negative tension balance mechanism 140 may refer to a tension balance mechanism of a winding machine, and will not be repeated here.

The negative rectifying deviation mechanism 150 is arranged downstream of the negative tension balance mechanism 140, and may adjust the position of the negative electrode sheet a in a direction perpendicular to the conveying direction. The negative rectifying deviation mechanism 150 may refer to an electrode sheet rectifying deviation mechanism of a winding machine, and will not be repeated here.

The negative delivery mechanism 100 changes the negative electrode sheet a from the shape of a roll into the shape of a straight strip having a certain tension, such that the negative electrode sheet stably enters the next station.

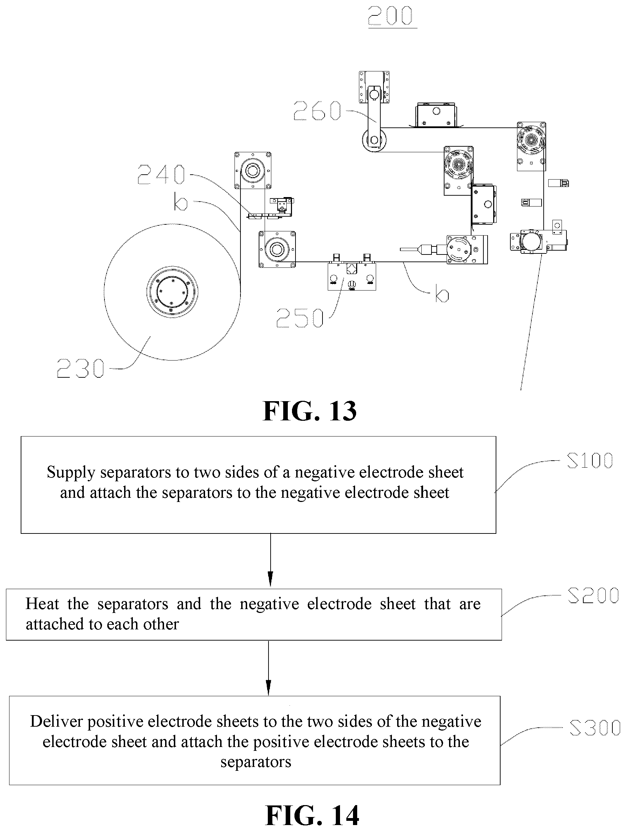

Referring to Figs. 2 and 13, Fig. 13 is a schematic structural diagram of a separator delivery mechanism 200 provided in some embodiments of the present invention. In some embodiments, each separator delivery mechanism 200 includes a separator roll spool 230, a separator rectifying deviation sensor 240, a separator strip splicing mechanism 250 and a separator tension balance mechanism 260.

The separator b roll spool may adopt single-roll separator b unrolling. In practical applications, in order to increase the time for assisting in replacing the roll, the separator roll spool 230 may also be a multi-roll spool. Multi-roll refers to two or more rolls. The separator roll spool 230 is driven to rotate by a servo motor to achieve the purpose of unrolling the separator b. The separator b roll spool may refer to an existing winding machine, and will not be repeated here.

Since it is necessary to deliver separators b to the two sides of the negative electrode sheet a, in some embodiments, the separator delivery mechanism 200 includes two separator roll spools 230. The separator roll spools 230 are respectively located on the two sides in the thickness direction of the negative electrode sheet a, and the two separator delivery mechanisms 200 respectively deliver the separators b to the two sides in the thickness direction of the negative electrode sheet a. Of course, in some embodiments, it is also possible to deliver the separators b to the two sides in the thickness direction of the negative electrode sheet a by means of one separator roll spool 230.

The separator rectifying deviation sensor 240 is arranged downstream of the separator roll spool 230. The separator rectifying deviation sensor 240 is used to detect whether the separator b deviates from a preset conveying path. It is necessary to adjust the conveying path of the separator b when deviating from the preset conveying path. For example, the negative roll spool 110 may be moved to rectify the deviation. For example, the negative roll spool 110 may be moved in a direction perpendicular to a strip running direction to achieve rectifying deviation.

The separator strip splicing mechanism 250 is arranged downstream of the separator rectifying deviation sensor 240. The separator strip splicing mechanism 250 is used to connect the end of a separator b of a separator b roll that is completely unrolled to the end of a separator b of another separator b roll, so as to realize strip splicing.

The separator tension balance mechanism 260 is arranged downstream of the separator strip splicing mechanism 250, and is used to adjust the tension of the separator b, so that the tension of the separator b is kept within a certain range. The separator tension balance mechanism 260 may refer to a tension balance mechanism of a winding machine, and will not be repeated here.

Since the separators b are attached to the two sides in the thickness direction of the negative electrode sheet a, the positive electrode sheet c may be delivered to the side of each separator b away from the negative electrode sheet a. In some embodiments, the stacking device 1000 includes two positive delivery mechanisms 400. The two positive delivery mechanisms 400 are respectively located on the two sides in the thickness direction of the negative electrode sheet a, and each of the two positive delivery mechanisms 400 delivers the positive electrode sheet c to the side, away from the negative electrode sheet a, of a respective one of the separators b on the two sides in the thickness direction of the negative electrode sheet a. Of course, in some embodiments, it is also possible to deliver the positive electrode sheets c to the two sides in the thickness direction of the negative electrode sheet a by means of one positive delivery mechanism 400.

The separator delivery mechanism 200 changes the separator from the shape of a roll into the shape of a straight strip having a certain tension, such that the separator is fed stably.

The positive delivery mechanism 400 may refer to the negative delivery mechanism 100 or the separator delivery mechanism 200, and will not be repeated here. The positive delivery mechanism 400 changes the positive electrode sheet c from the shape of a roll into the shape of a straight strip having a certain tension, such that the positive electrode sheet stably enters the next station.

Still referring to Fig. 2, in some embodiments, the stacking device 1000 further includes a positive and negative relative position detection mechanism 1500. The positive and negative relative position detection mechanism 1500 is arranged downstream of the second rolling assembly. The positive and negative relative position detection mechanism 1500 is used to detect the positions of the positive electrode sheets c and the negative electrode sheet a in the width direction of the electrode sheets. The positive electrode sheet c needs to be rejected if its width exceeds the width of the negative electrode sheet a. In this way, the safety performance of the electrode assembly 2000 is guaranteed.

As shown in Fig. 2, some embodiments of the present invention provide a stacking device 1000 that includes a negative delivery mechanism 100, separator delivery mechanisms 200, a first heating mechanism 300, positive delivery mechanisms 400, a first cleaning mechanism 500, a negative cutting mechanism 600, a second cleaning mechanism 700, a fourth heating mechanism 800 and a stacking mechanism 900.

The fourth heating mechanism 800 is arranged downstream of the negative delivery mechanism 100, and the negative cutting mechanism 600 is arranged downstream of the fourth heating mechanism 800. The negative delivery mechanism 100 is used to supply a negative electrode sheet a, the fourth heating mechanism 800 is used to heat the negative electrode sheet a, and the negative cutting mechanism 600 is used to form an indentation 2300 on the heated negative electrode sheet a.

The separator delivery mechanism 200 includes a separator roll spool 230, a second heating mechanism 210 and a first pressing roller assembly 220. The second heating mechanism 210 is arranged downstream of the separator roll spool 230, and the first pressing roller assembly 220 is arranged downstream of the second heating mechanism 210.

Separators b supplied from the separator roll spools 230 is heated by the second heating mechanism 210, and the first pressing roller assembly 220 presses the heated separators b against the negative electrode sheet a having the formed indentation 2300, so that the separators b are attached to two sides of the negative electrode sheet a, so that the negative electrode sheet a and the two layers of separators b are bonded to form a first laminated strip.

The first pressing roller assembly 220 is cleaned by the first cleaning mechanism 500.

The first heating mechanism 300 is arranged downstream of the first pressing roller assembly 220, and the first heating mechanism 300 is used to heat the first laminated strip (the negative electrode sheet a and the two separators b).

The positive delivery mechanism 400 includes a third heating mechanism 410, a positive cutting mechanism 420, and a second pressing roller assembly 430. The positive cutting mechanism 420 is arranged downstream of the third heating mechanism 410, and the second pressing roller assembly 430 is arranged downstream of the positive cutting mechanism 420.

A positive electrode sheet c is heated by the third heating mechanism 410 before being attached to the separator b, and the positive electrode sheet c heated by the third heating mechanism 410 is cut by the positive cutting mechanism 420 to form positive electrode sheets c with a smaller length, and the heated positive electrode sheet c is pressed against either side of the first laminated strip (the side of each separator b away from the negative electrode sheet a) by the second pressing roller assembly 430, so that the positive electrode sheet c is attached to the separator b. In this way, the negative electrode sheet a, the separators b and the positive electrode sheets c are bonded to form a second laminated strip.

The second pressing roller assembly 430 is cleaned by the second cleaning mechanism 700.

The stacking mechanism 900, the stacking platform 1100 and the pressing mechanism 1200 jointly laminate the second laminated strips to form a stacked type electrode assembly 2000.

As shown in Fig. 14, some embodiments of the present invention provide a method for manufacturing a stacked type electrode assembly 2000 that includes the following steps.

In step S100, separators b are supplied to two sides of a negative electrode sheet a, and the separators b are attached to the negative electrode sheet a.

In step S200, the separators b and the negative electrode sheet a that are attached to each other are heated.

In step S300, positive electrode sheets c are delivered to the two sides of the negative electrode sheet a, and the positive electrode sheets c are attached to the separators b.

The separators b and the negative electrode sheet a that are attached to each other are first heated so that the separators b have bonding properties, the positive electrode sheets c are then attached to the separators b, and the glue on the surfaces of the separators b are softened before the positive electrode sheets c are attached to the separators b, so that the separators b have bonding properties, and the positive electrode sheets c can be directly bonded to the separators b and delivered to the next station along with the separators b. There is no need to provide a PET film d feeding apparatus for supplying PET films d and to fix the positive electrode sheets c by means of the PET films d, so that the positive electrode sheets c are static relative to the PET films d, the positive electrode sheets c do not shift during a delivery process of the PET films d, and the positive electrode sheets c are transported to the next station under the drive of the PET films d. The entire structure of the stacking device 1000 is simplified, and the production cost of the stacked type electrode assembly 2000 is reduced. Moreover, no PET film is provided, so that the path through which heat passes is also shortened, and a stronger ability to soften the glue or adhesives on the separators is provided, thereby improving the attachment quality.

The above preferred embodiments are not intended to limit the present invention. For those skilled in the art, the present invention may have various modifications and changes, as long as they fall into the scope of the appended claims.

## Claims

1. A stacking device (1000), comprising:
a negative delivery mechanism (100) configured to deliver a negative electrode sheet (a);
a separator delivery mechanism (200) configured to deliver separators (b) to two sides of the negative electrode sheet (a) such that the separators (b) are attached to the negative electrode sheet (a);
a first heating mechanism (300) arranged downstream of the separator delivery mechanism (200) and configured to heat the negative electrode sheet (a) and the separators (b); and
a positive delivery mechanism (400) arranged downstream of the first heating mechanism (300) and configured to deliver positive electrode sheets (c) to the two sides of the negative electrode sheet (a) such that the positive electrode sheets (c) are attached to the separators (b);
wherein the stacking device (1000) comprises a stacking mechanism (900), a stacking platform (1100) and a pressing mechanism (1200), wherein
the stacking mechanism (900) is arranged downstream of the positive delivery mechanism (400) and configured to arrange the negative electrode sheet (a), the separators (b), and the positive electrode sheets (c) on the stacking platform (1100) in a laminated manner to form a stacked type structure, the stacked type structure comprises a plurality of bent segments (2200) and a plurality of laminated segments (2100) arranged in a laminated manner, and each of the bent segments (2200) is used to connect two adjacent laminated segments (2100); the stacking platform (1100) is configured to carry the stacked type structure; and the pressing mechanism (1200) is arranged at the stacking platform (1100) and configured to flatten the bent segments (2200);
wherein the separator delivery mechanism (200) comprises a second heating mechanism (210) configured to heat the two separators (b) before the two separators (b) are attached to the negative electrode sheet (a);
**characterized in that** the second heating mechanism (210) is configured to heat the side of the separator (b) that is used to attach to the negative electrode sheet (a).

2. The stacking device (1000) according to claim 1, wherein the first heating mechanism (300) comprises two first heating assemblies (310) respectively located on the two sides of the negative electrode sheet (a) and respectively used for heating the separators (b) on the two sides of the negative electrode sheet (a) and the negative electrode sheet (a).

3. The stacking device (1000) according to claim 1, wherein the second heating mechanism (210) comprises two second heating assemblies (211) respectively configured to heat the two separators (b).

4. The stacking device (1000) according to claim 1 or claim 3, wherein the separator delivery mechanism (200) further comprises a first pressing roller assembly (220) arranged downstream of the second heating mechanism (210) and upstream of the first heating mechanism (300) and configured to press the separators (b) against the negative electrode sheet (a) such that the separators (b) are attached to the two sides of the negative electrode sheet (a).

5. The stacking device (1000) according to any one of claims 1-4, wherein the positive delivery mechanism (400) comprises a third heating mechanism (410) configured to heat the positive electrode sheets (c) before the positive electrode sheets (c) are attached to the separators (b).

6. The stacking device (1000) according to claim 5, wherein the third heating mechanism (410) comprises two third heating assemblies (411) respectively configured to heat the corresponding positive electrode sheet (c); optionally the third heating assembly (411) is configured to heat two sides of the corresponding positive electrode sheet (c).

7. The stacking device (1000) according to claim 5 or claim 6, wherein the positive delivery mechanism (400) further comprises a positive cutting mechanism (420) arranged downstream of the third heating mechanism (410) and configured to cut the positive electrode sheet (c).

8. The stacking device (1000) according to any one of claims 1-7, wherein the positive delivery mechanism (400) further comprises a second pressing roller assembly (430) configured to press the positive electrode sheets (c) against the separators (b) such that the positive electrode sheets (c) are attached to the separators (b).

9. The stacking device (1000) according to any one of claims 1-8, wherein the stacking device (1000) further comprises a fourth heating mechanism (800) arranged downstream of the negative delivery mechanism (100) and configured to heat the negative electrode sheet (a) before the two separators (b) are attached to the negative electrode sheet (a).

10. The stacking device (1000) according to any one of claims 1-9, wherein the pressing mechanism (1200) comprises two rotating portions (1210) arranged opposite to each other, the rotating portions (1210) being rotatably mounted to the stacking platform (1100) and configured to flatten the bent segments (2200); optionally the rotating portion (1210) comprises a brush (1211) and a main body (1212), wherein the main body (1212) is rotatably mounted to the stacking platform (1100), and the brush (1211) is configured to flatten the bent segments (2200); and optionally the stacking device (1000) comprises a driving mechanism (1300) and two stacking platforms (1100), wherein the driving mechanism (1300) is configured to switch the positions of the two stacking platform (1100) such that one of the stacking platforms (1100) is located in a stacking position and the other stacking platform (1100) is in a non-stacking position.

11. A method for manufacturing a stacked type electrode assembly (2000) using the stacking device of any one of claims 1 - 10, comprising:
supplying separators (b) to two sides of a negative electrode sheet (a) and attaching the separators (b) to the negative electrode sheet (a);
heating the separators (b) and the negative electrode sheet (a) that are attached to each other; and
delivering positive electrode sheets (c) to the two sides of the negative electrode sheet (a) and attaching the positive electrode sheets (c) to the separators (b);
arranging the negative electrode sheet (a), the separators (b), and the positive electrode sheets (c) in a laminated manner to form a stacked type structure;
wherein the method further comprises heating the two separators (b) before the two separators (b) are attached to the negative electrode sheet (a).

12. The method according to claim 11, wherein the method comprises providing glue on the two sides of each separator (b) to bond the separator (b) to the negative electrode sheet (a) and to bond the separator (b) to the respective positive electrode sheet (c).

13. The method according to claim 11 or claim 12, wherein the method further comprises providing glue on the two sides of the negative electrode sheet (a) to bond the separators (b) to the negative electrode sheet (a).

14. The method according to any one of the claims 11 - 13, the method further comprises providing glue on the positive electrode sheets (c) to bond the separators (b) to the positive electrode sheets (c).

## Patentansprüche

1. Stapelvorrichtung (1000), umfassend:
einen Negativzuführmechanismus (100), der so konfiguriert ist, dass er eine Negativelektrodenplatte (a) zuführt;
einen Separator-Zuführmechanismus (200), der so konfiguriert ist, dass er Separatoren (b) an zwei Seiten der Negativelektrodenplatte (a) zuführt, so dass die Separatoren (b) an der Negativelektrodenplatte (a) befestigt werden;
einen ersten Heizmechanismus (300), der stromabwärts des Separator-Zuführmechanismus (200) angeordnet und so konfiguriert ist, dass er die Negativelektrodenplatte (a) und die Separatoren (b) erhitzt; und
einen Positivzuführmechanismus (400), der stromabwärts des ersten Heizmechanismus (300) angeordnet und so konfiguriert ist, dass er Positivelektrodenplatten (c) an den zwei Seiten der Negativelektrodenplatte (a) zuführt, so dass die Positivelektrodenplatten (c) an den Separatoren (b) befestigt werden;
wobei die Stapelvorrichtung (1000) einen Stapelmechanismus (900), eine Stapelplattform (1100) und einen Druckmechanismus (1200) umfasst, wobei
der Stapelmechanismus (900) stromabwärts des Positivzuführmechanismus (400) angeordnet und so konfiguriert ist, dass er die Negativelektrodenplatte (a), die Separatoren (b) und die Positivelektrodenplatten (c) auf der Stapelplattform (1100) auf eine geschichtete Weise anordnet, um eine Stapeltyp-Struktur auszubilden, wobei die Stapeltyp-Struktur eine Vielzahl von gebogenen Segmenten (2200) und eine Vielzahl von geschichteten Segmenten (2100) umfasst, die auf eine geschichtete Weise angeordnet sind, und jedes der gebogenen Segmente (2200) verwendet wird, um zwei benachbarte geschichtete Segmente (2100) zu verbinden; die Stapelplattform (1100) so konfiguriert ist, dass sie die Stapeltyp-Struktur trägt; und der Druckmechanismus (1200) an der Stapelplattform (1100) angeordnet und so konfiguriert ist, dass er die gebogenen Segmente (2200) abflacht;
wobei der Separator-Zuführmechanismus (200) einen zweiten Heizmechanismus (210) umfasst, der so konfiguriert ist, dass er die zwei Separatoren (b) erhitzt, bevor die zwei Separatoren (b) an der Negativelektrodenplatte (a) befestigt werden;
**dadurch gekennzeichnet, dass** der zweite Heizmechanismus (210) so konfiguriert ist, dass er die Seite des Separators (b) erhitzt, die verwendet wird, um an der Negativelektrodenplatte (a) befestigt zu werden.

2. Stapelvorrichtung (1000) nach Anspruch 1, wobei der erste Heizmechanismus (300) zwei erste Heizanordnungen (310) umfasst, die jeweils auf den zwei Seiten der Negativelektrodenplatte (a) angeordnet sind und jeweils zum Heizen der Separatoren (b) auf den zwei Seiten der Negativelektrodenplatte (a) und der Negativelektrodenplatte (a) verwendet werden.

3. Stapelvorrichtung (1000) nach Anspruch 1, wobei der zweite Heizmechanismus (210) zwei zweite Heizanordnungen (211) umfasst, die jeweils so konfiguriert sind, dass sie die zwei Separatoren (b) erhitzen.

4. Stapelvorrichtung (1000) nach Anspruch 1 oder Anspruch 3, wobei der Separator-Zuführmechanismus (200) ferner eine erste Druckwalzenanordnung (220) umfasst, die stromabwärts des zweiten Heizmechanismus (210) und stromaufwärts des ersten Heizmechanismus (300) angeordnet und so konfiguriert ist, dass sie die Separatoren (b) gegen die Negativelektrodenplatte (a) drückt, so dass die Separatoren (b) an den zwei Seiten der Negativelektrodenplatte (a) befestigt werden.

5. Stapelvorrichtung (1000) nach einem der Ansprüche 1-4, wobei der Positivzuführmechanismus (400) einen dritten Heizmechanismus (410) umfasst, der so konfiguriert ist, dass er die Positivelektrodenplatten (c) erhitzt, bevor die Positivelektrodenplatten (c) an den Separatoren (b) befestigt werden.

6. Stapelvorrichtung (1000) nach Anspruch 5, wobei der dritte Heizmechanismus (410) zwei dritte Heizanordnungen (411) umfasst, die jeweils so konfiguriert sind, dass sie die entsprechende Positivelektrodenplatte (c) erhitzen; optional die dritte Heizanordnung (411) so konfiguriert ist, dass sie zwei Seiten der entsprechenden Positivelektrodenplatte (c) erhitzt.

7. Stapelvorrichtung (1000) nach Anspruch 5 oder Anspruch 6, wobei der Positivzuführmechanismus (400) ferner einen Positivschneidemechanismus (420) umfasst, der stromabwärts des dritten Heizmechanismus (410) angeordnet und so konfiguriert ist, dass er die Positivelektrodenplatte (c) schneidet.

8. Stapelvorrichtung (1000) nach einem der Ansprüche 1-7, wobei der Positivzuführmechanismus (400) ferner eine zweite Druckwalzenanordnung (430) umfasst, die so konfiguriert ist, dass sie die Positivelektrodenplatten (c) gegen die Separatoren (b) drückt, so dass die Positivelektrodenplatten (c) an den Separatoren (b) befestigt werden.

9. Stapelvorrichtung (1000) nach einem der Ansprüche 1-8, wobei die Stapelvorrichtung (1000) ferner einen vierten Heizmechanismus (800) umfasst, der stromabwärts des Negativzuführmechanismus (100) angeordnet und so konfiguriert ist, dass er die Negativelektrodenplatte (a) erhitzt, bevor die zwei Separatoren (b) an der Negativelektrodenplatte (a) befestigt werden.

10. Stapelvorrichtung (1000) nach einem der Ansprüche 1-9, wobei der Druckmechanismus (1200) zwei rotierende Abschnitte (1210) umfasst, die einander gegenüberliegend angeordnet sind, wobei die rotierenden Abschnitte (1210) an der Stapelplattform (1100) drehbar montiert und so konfiguriert sind, dass sie die gebogenen Segmente (2200) abflachen; optional der rotierende Abschnitt (1210) eine Bürste (1211) und einen Hauptkörper (1212) umfasst, wobei der Hauptkörper (1212) an der Stapelplattform (1100) drehbar montiert und die Bürste (1211) so konfiguriert ist, dass sie die gebogenen Segmente (2200) abflacht; und optional die Stapelvorrichtung (1000) einen Antriebsmechanismus (1300) und zwei Stapelplattformen (1100) umfasst, wobei der Antriebsmechanismus (1300) so konfiguriert ist, dass er die Positionen der zwei Stapelplattformen (1100) so umschaltet, dass sich eine der Stapelplattformen (1100) in einer Stapelposition befindet und die andere Stapelplattform (1100) in einer Nicht-Stapelposition befindet.

11. Verfahren zur Herstellung einer Stapeltyp-Elektrodenanordnung (2000) unter Verwendung der Stapelvorrichtung nach einem der Ansprüche 1-10, umfassend:
Anbringen von Separatoren (b) an zwei Seiten einer Negativelektrodenplatte (a) und Befestigen der Separatoren (b) an der Negativelektrodenplatte (a);
Erhitzen der Separatoren (b) und der Negativelektrodenplatte (a), die aneinander befestigt sind; und
Zuführen von Positivelektrodenplatten (c) an den zwei Seiten der Negativelektrodenplatte (a) und Befestigen der Positivelektrodenplatten (c) an den Separatoren (b);
Anordnen der Negativelektrodenplatte (a), der Separatoren (b) und der Positivelektrodenplatten (c) auf eine geschichtete Weise, um eine Stapeltyp-Struktur auszubilden;
wobei das Verfahren ferner das Erhitzen der zwei Separatoren (b) umfasst, bevor die zwei Separatoren (b) an der Negativelektrodenplatte (a) befestigt werden.

12. Verfahren nach Anspruch 11, wobei das Verfahren das Bereitstellen von Klebstoff auf den zwei Seiten von jedem Separator (b) umfasst, um den Separator (b) an die Negativelektrodenplatte (a) zu binden und den Separator (b) an die jeweilige Positivelektrodenplatte (c) zu binden.

13. Verfahren nach Anspruch 11 oder Anspruch 12, wobei das Verfahren ferner das Bereitstellen von Klebstoff auf den zwei Seiten der Negativelektrodenplatte (a) umfasst, um die Separatoren (b) an die Negativelektrodenplatte (a) zu binden.

14. Verfahren nach einem der Ansprüche 11-13, wobei das Verfahren ferner das Bereitstellen von Klebstoff auf der Positivelektrodenplatte (c) umfasst, um die Separatoren (b) an die Positivelektrodenplatte (c) zu binden.

## Revendications

1. Dispositif d'empilement (1000), comprenant :
un mécanisme de distribution négative (100) configuré pour distribuer une feuille d'électrode négative (a) ;
un mécanisme de distribution de séparateur (200) configuré pour distribuer des séparateurs (b) sur deux côtés de la feuille d'électrode négative (a) de telle sorte que les séparateurs (b) sont fixés à la feuille d'électrode négative (a) ;
un premier mécanisme de chauffage (300) disposé en aval du mécanisme de distribution de séparateur (200) et configuré pour chauffer la feuille d'électrode négative (a) et les séparateurs (b) ; et
un mécanisme de distribution positive (400) disposé en aval du premier mécanisme de chauffage (300) et configuré pour distribuer des feuilles d'électrode positive (c) aux deux côtés de la feuille d'électrode négative (a) de telle sorte que les feuilles d'électrode positive (c) sont fixées aux séparateurs (b) ;
dans lequel le dispositif d'empilement (1000) comprend un mécanisme d'empilement (900), une plateforme d'empilement (1100) et un mécanisme de pressage (1200), dans lequel
le mécanisme d'empilement (900) est disposé en aval du mécanisme de distribution positive (400) et est configuré pour disposer la feuille d'électrode négative (a), les séparateurs (b) et les feuilles d'électrode positive (c) sur la plateforme d'empilement (1100) de manière stratifiée pour former une structure de type empilé, la structure de type empilé comprend une pluralité de segments courbés (2200) et une pluralité de segments stratifiés (2100) disposés de manière stratifiée, et chacun des segments courbés (2200) est utilisé pour relier deux segments stratifiés adjacents (2100) ; la plateforme d'empilement (1100) est configurée pour transporter la structure de type empilé ; et le mécanisme de pressage (1200) est disposé sur la plateforme d'empilement (1100) et est configuré pour aplatir les segments courbés (2200) ;
dans lequel le mécanisme de distribution de séparateur (200) comprend un deuxième mécanisme de chauffage (210) configuré pour chauffer les deux séparateurs (b) avant que les deux séparateurs (b) ne soient fixés à la feuille d'électrode négative (a) ;
**caractérisé en ce que** le deuxième mécanisme de chauffage (210) est configuré pour chauffer le côté du séparateur (b) qui est utilisé pour être fixé à la feuille d'électrode négative (a).

2. Dispositif d'empilement (1000) selon la revendication 1, dans lequel le premier mécanisme de chauffage (300) comprend deux ensembles de chauffage (310) situés respectivement sur les deux côtés de la feuille d'électrode négative (a) et respectivement utilisés pour chauffer les séparateurs (b) sur les deux côtés de la feuille d'électrode négative (a) et de la feuille d'électrode négative (a).

3. Dispositif d'empilement (1000) selon la revendication 1, dans lequel le deuxième mécanisme de chauffage (210) comprend deux deuxièmes ensembles de chauffage (211) respectivement configurés pour chauffer les deux séparateurs (b).

4. Dispositif d'empilement (1000) selon la revendication 1 ou la revendication 3, dans lequel le mécanisme de distribution de séparateur (200) comprend en outre un premier ensemble de rouleaux presseurs (220) disposé en aval du deuxième mécanisme de chauffage (210) et en amont du premier mécanisme de chauffage (300) et configuré pour presser les séparateurs (b) contre la feuille d'électrode négative (a) de telle sorte que les séparateurs (b) sont fixés aux deux côtés de la feuille d'électrode négative (a).

5. Dispositif d'empilement (1000) selon l'une quelconque des revendications 1 à 4, dans lequel le mécanisme de distribution positive (400) comprend un troisième mécanisme de chauffage (410) configuré pour chauffer les feuilles d'électrode positive (c) avant que les feuilles d'électrode positive (c) ne soient fixées aux séparateurs (b).

6. Dispositif d' empilement (1000) selon la revendication 5, dans lequel le troisième mécanisme de chauffage (410) comprend deux troisièmes ensembles de chauffage (411) respectivement configurés pour chauffer la feuille d'électrode positive (c) correspondante ; en option le troisième ensemble de chauffage (411) est configuré pour chauffer les deux côtés de la feuille d'électrode positive (c) correspondante.

7. Dispositif d'empilement (100) selon la revendication 5 ou la revendication 6, dans lequel le mécanisme de distribution positive (400) comprend en outre un mécanisme de coupe positif (420) disposé en aval du troisième mécanisme de chauffage (410) et configuré pour couper la feuille d'électrode positive (c).

8. Dispositif d'empilement (1000) selon l'une quelconque des revendications 1 à 7, dans lequel le mécanisme de distribution positive (400) comprend en outre un deuxième ensemble de rouleaux presseurs (430) configuré pour presser les feuilles d'électrode positive (c) contre les séparateurs (b) de telle sorte que les feuilles d'électrode positive (c) sont fixées aux séparateurs (b).

9. Dispositif d'empilement (1000) selon l'une quelconque des revendications 1 à 8, dans lequel le dispositif d'empilement (1000) comprend en outre un quatrième mécanisme de chauffage (800) disposé en aval du mécanisme de distribution négative (100) et configuré pour chauffer la feuille d'électrode négative (a) avant que les deux séparateurs (b) ne soient fixés à la feuille d'électrode négative (a).

10. Dispositif d'empilement (1000) selon l'une quelconque des revendications 1 à 9, dans lequel le mécanisme de pressage (1200) comprend deux parties rotatives (1210) disposées à l'opposé l'une de l'autre, les parties rotatives (1210) étant montées de manière rotative sur la plateforme d'empilement (1100) et configurées pour aplatir les segments courbés (2200) ; en option la partie rotative (1210) comprend une brosse (1211) et un corps principal (1212), dans lequel le corps principal (1212) est monté de manière rotative sur la plateforme d'empilement (1100), et la brosse (1211) est configurée pour aplatir les segments courbés (2200) ; et en option le dispositif d'empilement (1000) comprend un mécanisme d'entraînement (1300) et deux plateformes d'empilement (1100), dans lequel le mécanisme d'entraînement (1300) est configuré pour commuter les positions des deux plateformes d'empilement (1100) de telle sorte que l'une des plateformes d'empilement (1100) est située dans une position d'empilement et l'autre plateforme d'empilement (1100) se trouve dans une position de non-empilement.

11. Procédé de fabrication d'un ensemble d'électrodes de type empilé (200) en utilisant le dispositif d'empilement selon l'une quelconque des revendications 1 - 10, comprenant :
la fourniture de séparateurs (b) aux deux côtés d'une feuille d'électrode négative (a) et la fixation des séparateurs (b) à la feuille d'électrode négative (a) ;
le chauffage des séparateurs (b) et de la feuille d'électrode négative (a) qui sont fixés l'un à l'autre ; et
la distribution de feuilles d'électrode positive (c) aux deux côtés de la feuille d'électrode négative (a) et la fixation des feuilles d'électrode positive (c) aux séparateurs (b) ;
la disposition de la feuille d'électrode négative (a), des séparateurs (b) et des feuilles d'électrode positive (c) de manière stratifiée pour former une structure de type empilé ;
dans lequel le procédé comprend en outre le chauffage des deux séparateurs (b) avant que les deux séparateurs (b) ne soient fixés à la feuille d'électrode négative (a).

12. Procédé selon la revendication 11, dans lequel le procédé comprend la fourniture de colle sur les deux côtés de chaque séparateur (b) pour lier le séparateur (b) à la feuille d'électrode négative (a) et pour lier le séparateur (b) à la feuille d'électrode positive (c) respective.

13. Procédé selon la revendication 11 ou la revendication 12, dans lequel le procédé comprend en outre la fourniture de colle sur les deux côtés de la feuille d'électrode négative (a) pour lier les séparateurs (b) à la feuille d'électrode négative (a).

14. Procédé selon l'une quelconque des revendications 11 - 13, le procédé comprenant en outre la fourniture de colle sur les feuilles d'électrode positive (c) pour lier les séparateurs (b) aux feuilles d'électrode positive (c).
